# EUROPEAN PATENT SPECIFICATION

(11) **EP 3 751 759 B1**
(45) Date of publication and mention of the grant of the patent: **06.08.2025**
(21) Application number: 19751450.8
(22) Date of filing: 01.02.2019
(51) Int. Cl.: H04B 10/61, H04B 10/2507, H04J 14/02

(54) **METHOD AND DEVICE FOR CONTROLLING WSS CHANNEL ATTENUATION, STORAGE MEDIUM**
VERFAHREN UND VORRICHTUNG ZUR STEUERUNG DER WSS-KANAL-DÄMPFUNG, SPEICHERMEDIUM
PROCÉDÉ ET DISPOSITIF DE COMMANDE D'ATTÉNUATION DE CANAL WSS, SUPPORT DE STOCKAGE

(30) Priority: 07.02.2018 CN 201810124688
(43) Date of publication of application: 16.12.2020
(73) Proprietor: ZTE Corporation, Shenzhen, Guangdong 518057 (CN)
(72) Inventor: SHI, Gu, Shenzhen, Guangdong 518057 (CN); SHANG, Wendong, Shenzhen, Guangdong 518057 (CN); ZHANG, Hongyu, Shenzhen, Guangdong 518057 (CN); GONG, Yadong, Shenzhen, Guangdong 518057 (CN)
(74) Representative: Aipex B.V.
(86) International application number: PCT/CN2019/074371
(87) International publication number: WO 2019/154308

(56) References cited:
- WO-A1-2017/154454
- CN-A- 101 222 277
- CN-A- 102 932 065
- JP-A- 2016 066 888
- US-A1- 2014 112 660
- US-A1- 2014 314 416
- US-B2- 8 280 257
- US-B2- 9 806 842
- MAGALHAES EDUARDO ET AL: "Global WSS-based equalization strategies for SDN metropolitan mesh optical networks", 2014 THE EUROPEAN CONFERENCE ON OPTICAL COMMUNICATION (ECOC), SYSTEMATIC PARIS REGION SYSTEMS AND ICT CLUSTER, 21 September 2014 (2014-09-21), pages 1 - 3, XP032689695, DOI: 10.1109/ECOC.2014.6964185
- RAHMAN TALHA ET AL: "On the Mitigation of Optical Filtering Penalties Originating From ROADM Cascade", IEEE PHOTONICS TECHNOLOGY LETTERS, IEEE SERVICE CENTER, PISCATAWAY, NJ, US, vol. 26, no. 2, 1 January 2014 (2014-01-01), pages 154 - 157, XP011536384, ISSN: 1041-1135, [retrieved on 20131224], DOI: 10.1109/LPT.2013.2290745

## Description

### TECHNICAL FIELD

The present invention relates to the field of communications and, in particular, to a method and device for controlling a wavelength-selective switch (WSS) channel attenuation parameter, a device and a storage medium.

### BACKGROUND

An existing Dense Wavelength Division Multiplexing (DWDM) system mostly adopts a channel spacing of 50 GHz or 100 GHz and thus is actually a fixed-grid Wavelength Division Multiplexing (WDM) system. With the development of ultra-high-speed 100G/B100G WDM transmission network and Automatically Switched Optical Network (ASON)/Software Defined Optical Network (SDON) technologies, a traditional WDM system is facing challenges in spectrum utilization and flexibility, and a demand is created for a flexible-grid WDM system that supports different channel spacings and transmission rates and has a channel spacing dynamically settable as desired.

The Flexible Grid technology was first standardized by the International Telecommunication Union-T (ITU-T) G.694.1 standard in 2011. In the standard, the nominal central frequencies of normative frequency slots are 193.1 THz + n × 6.25 GHz. The current mainstream WSS manufacturers all introduce WSS modules having a channel spacing of 12.5 GHz or 6.25 GHz, which achieves the quasi-Nyquist WDM transmission scheme having a higher spectral efficiency. For example, 100G Polarization Multiplexed Quadrature Phase Shift Keying (PM-QPSK) traffic optical signals (containing 25% forward error correction (FEC) overhead) having a baud rate of about 34 Gbaud are transmitted in channels having a channel spacing of 37.5 GHz. This method can further reduce channel spacings of a WDM system, thereby improving the spectral efficiency of the C-band in an optical fiber system and expanding the system transmission capacity.

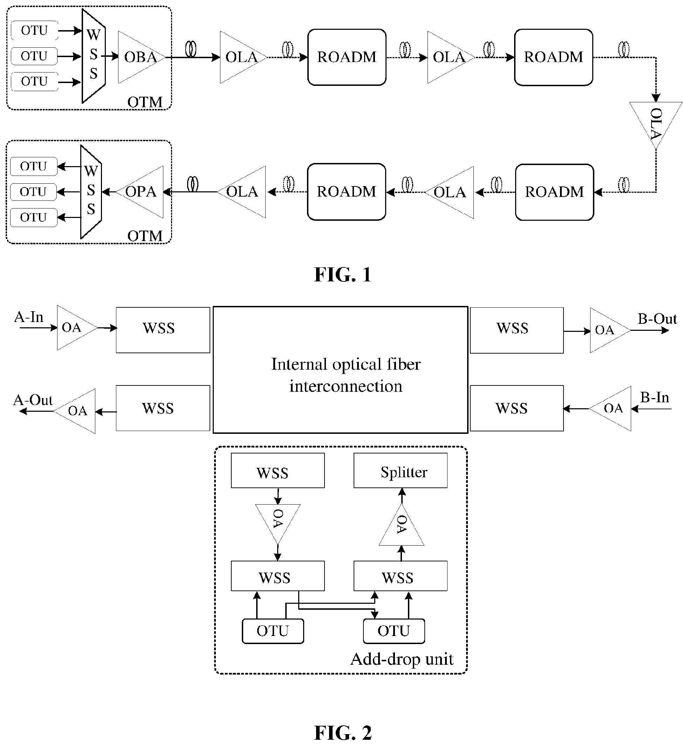

Nevertheless, in a practical engineering application, a network structure composed of multiple Flex reconfigurable optical add-drop multiplexer (ROADM) sites exists in a network. As shown in FIG. 1, it illustrates a scenario that Long-span end-to-end traffic signal light penetrates cascaded ROADM sites in a transmission link. As shown in FIG. 2, both penetrating traffic light and add-drop traffic light at ROADM sites require cross-scheduling control by WSSs. The ROADM sites shown in FIG. 2 are typical two-dimensional ROADM site structures. WSSs in the straight-through direction of the ROADM sites cause filtering damage to the penetrating traffic light. Particularly in the quasi-Nyquist WDM scheme, a signal spectral bandwidth is close to a WSS channel bandwidth. In this manner, the receptivity severely deteriorates after the absorption spectrum is filtered by cascaded WSSs. This is mainly because the high-frequency components of the spectrum are significantly suppressed after being filtered by the cascaded WSSs. Thus, a large error occurs in the phase detection in the clock extraction algorithm in the receiver, and the clock jitter or extraction failure leads to a positional deviation in data recovery. As a result, the transmission traffic is interrupted.

No effective solution has been proposed to address the problem in which the performance of a receiver deteriorates after filtered optical signals enter the receiver because cascaded WSSs cause filtering damage to the optical signals in the related art. US9806842B2 introduces about a WSS for shaping optical signals. US20140314416A1 introduces about a method for reducing crosstalk among subcarriers of a super-channel. US20140112660A1 introduces about a method for channel additions over multiple cascaded optical nodes. MAGALHAES EDUARDO ET AL: "Global WSS-based equalization strategies for SDN metropolitan mesh optical networks", 2014 THE EUROPEAN CONFERENCE ON OPTICAL COMMUNICATION (EOOC), SYSTEMATIC PARIS REGION SYSTEMS AND ICT CLUSTER, 21 September 2014 (2014-09-21), pages 1-3, XP032689695 introduces about global WSS-based equalization strategies for SDN metropolitan mesh optical networks. JP2016066888A1 introduces about a transmission device that can suppress a deteriorated transmission characteristic of a control target super channel.

### SUMMARY

Embodiments of the present invention provide a method and device for controlling the WSS channel attenuation parameter and a storage medium to solve at least the problem in which the performance of a receiver deteriorates after filtered optical signals enter the receiver because cascaded WSSs cause filtering damage to the optical signals in the related art. The invention is set out in the appended set of claims.

Through embodiments of the present invention, the following operations are performed for each WSS module in a cascaded WSS system: inputting white noise to the channel of each WSS module and adjusting the attenuation parameters of all slices of the channel according to a predefined rule such that the flatness of the output spectrum of the white noise is less than a first threshold; and calculating the average value of the adjusted attenuation parameters of the slices of a plurality of WSS modules and controlling the WSS channel attenuation parameter of each WSS module based on the average value. The preceding solution solves the problem in which the performance of a receiver deteriorates after filtered optical signals enter the receiver because cascaded WSSs cause filtering damage to the optical signals in the related art, thereby effectively reducing filtering damage when the optical signals pass through the cascaded WSSs and improving the performance of the receiver.

### BRIEF DESCRIPTION OF DRAWINGS

The drawings described herein are used to provide a further understanding of the present invention and form a part of the present application. The illustrative embodiments and the description thereof in the present invention are used to explain the present invention and not to limit the present invention improperly. In the drawings:
FIG. 1 is a block diagram of a unidirectional DWDM Flex ROADM network in the related art;
FIG. 2 is a block diagram illustrating the internal structure of ROADM sites in the related art;
FIG. 3 is a flowchart of a method for controlling the WSS channel attenuation parameter according to an embodiment of the present invention;
FIG. 4 is a schematic diagram of pre-emphasis of an optical transmitter according to an embodiment of the present invention;
FIG. 5 is a block diagram illustrating the structure of a device for controlling the WSS channel attenuation parameter according to an embodiment of the present invention;
FIG. 6 is a block diagram illustrating the structure of the adjustment module 52 of a device for controlling the WSS channel attenuation parameter according to an embodiment of the present invention;
FIG. 7 is a block diagram illustrating the structure of the control module 54 of a device for controlling the WSS channel attenuation parameter according to an embodiment of the present invention;
FIG. 8 is a flowchart for adjusting attenuation parameters according to a preferred embodiment of the present invention; and
FIG. 9 is a schematic diagram illustrating WSS-slice-level spectrum shaping according to an embodiment of the present invention.

### DETAILED DESCRIPTION

Hereinafter, the present invention will be described in detail with reference to drawings and in conjunction with embodiments. It is to be noted that if not in collision, the embodiments described herein and the features in the embodiments may be combined with each other.

It is to be noted that the terms such as "first" and "second" in the description, claims and drawings of the present invention are used to distinguish between similar objects and are not necessarily used to describe a particular order or sequence.

### Embodiment one

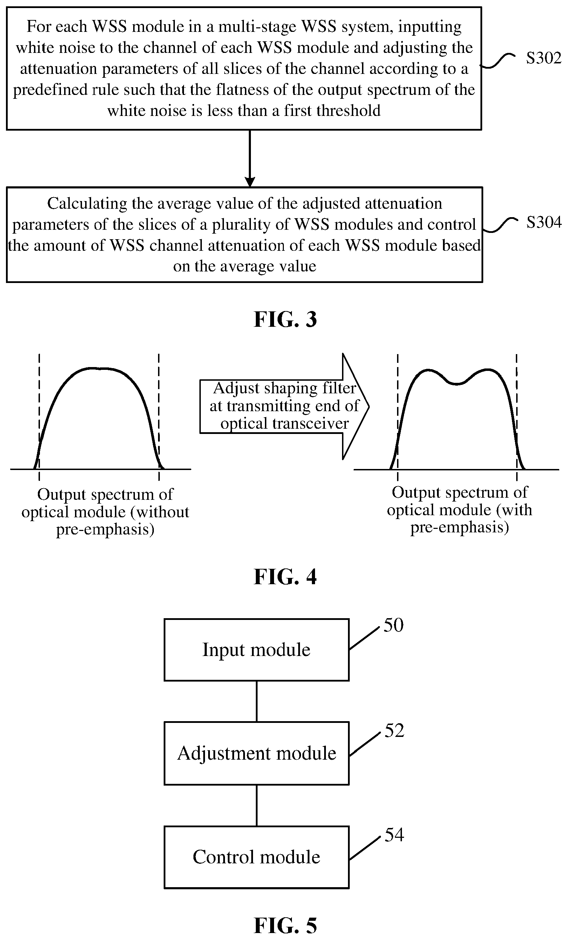

This embodiment provides a method for controlling the WSS channel attenuation parameter. FIG. 3 is a flowchart of the method for controlling the WSS channel attenuation parameter according to an embodiment of the present invention. As shown in FIG. 3, the method includes the steps S302 and S304 below.

In step S302, for each WSS module in a cascaded WSS system, white noise is input to the channel of each WSS module and the attenuation parameters of all slices of the channel are adjusted according to a predefined rule such that the flatness of the output spectrum of the white noise is less than a first threshold.

In step S304, the average value of the adjusted attenuation parameters of the slices of a plurality of WSS modules is calculated and the WSS channel attenuation parameter of each WSS module is controlled based on the average value.

Through the preceding steps, the following operations are performed for each WSS module in a cascaded WSS system: inputting white noise to the channel of each WSS module and adjusting the attenuation parameters of all slices of the channel according to a predefined rule such that the flatness of the output spectrum of the white noise is less than a first threshold; and calculating the average value of the adjusted attenuation parameters of the slices of a plurality of WSS modules and controlling the WSS channel attenuation parameter of each WSS module based on the average value. The preceding solution solves the problem in which the performance of a receiver deteriorates after filtered optical signals enter the receiver because cascaded WSSs cause filtering damage to the optical signals in the related art, thereby effectively reducing filtering damage when the optical signals pass through the cascaded WSSs and improving the performance of the receiver. Step S302 can be performed in multiple manners during the actual operation. One manner is provided in this embodiment of the present invention. The manner is described below.

The attenuation parameters of all slices of the channel are adjusted according to the predefined rule by using the solution below.

The attenuation parameters of the secondary edge slices of all slices are adjusted so that a first adjustment result is obtained; the attenuation parameters of one or more center slices of the channel are adjusted based on the first adjustment result so that a second adjustment result is obtained; and then other slices of all slices excluding the secondary edge slices and the center slices are adjusted based on the first adjustment result and the second adjustment result. That is, in this embodiment of the present invention, the attenuation parameters of the secondary edge slices of all slices, the attenuation parameters of the center slices of all slices and the attenuation parameters of other slices of all slices may be adjusted in sequence.

Based on the preceding solution, the detailed solution provided in this embodiment of the present invention is described below as to how to adjust the secondary edge slices, center slices and other slices of all slices.
(1) The attenuation parameters of the secondary edge slices of all slices are adjusted preferably based on the baud rate of a traffic signal of the channel. That is, baud rate of the traffic signal of the channel are acquired and then the attenuation parameters of the secondary edge slices of all slices are adjusted based on the baud rate.
   Further, the attenuation parameters of the secondary edge slices are adjusted such that the difference between the spectral height of the lowest spectral point corresponding to the secondary edge slices and the spectral height of f_{c} - B/2 is less than a second threshold or such that the difference between the spectral height of the lowest spectral point corresponding to the secondary edge slices and the spectral height of f_{c} + B/2 is less than the second threshold. f_{c} denotes the central frequency of the channel. B denotes the baud rate of the traffic signal.
(2) The attenuation parameters of the center slices of the channel may be adjusted based on the first adjustment result of the attenuation parameters of the secondary edge slices by using the solution below.
   That the attenuation parameters of one or more center slices of the channel are matched with the attenuation parameters of the secondary edge slices of the channel such that the flatness of the output spectrum of the white noise in segment f_{c} - B/2 to f_{c} or segment f_{c} to f_{c} - B/2 is less than the first threshold may be understood as that in this embodiment of the present invention, the adjusted attenuation parameters of one or more center slices are matched with the attenuation parameters of the secondary edge slices such that the flatness of the left half or the right half of the B long spectrum of the channel is less than the first threshold.
(3) Other slices of all slices excluding the secondary edge slices and the center slices are adjusted based on the first adjustment result and the second adjustment result in the manner below.

By taking the central frequency f_{c} of the channel as the central axis, the attenuation parameters of other slices are adjusted symmetrically according to the attenuation parameters of the secondary edge slices in the first adjustment result and the attenuation parameters of the center slices in the second adjustment result. The adjustment process for other slices is actually based on the adjustments to the secondary edge slices and the center slices. For example, in the case where there are currently 6 slices numbered 1, 2, 3, 4, 5 and 6 in sequence, first the attenuation parameter of secondary edge slice 2 is adjusted and then the attenuation parameter of center slice 3 is adjusted. Symmetrically, the attenuation parameter of slice 2 is mapped onto slice 5 on the right and the attenuation parameter of slice 3 is mapped onto slice 4 on the right. The preceding can be understood as symmetry from the left to the right. During the actual operation, symmetry from the right to the left is also feasible. This is not limited in this embodiment of the present invention. In addition, in this embodiment of the present invention, a manner is provided as below for calculating the average value described in step S304.

The attenuation parameters of first slices of all WSS modules are acquired separately and the average value of the attenuation parameters of the first slices of the all WSS modules is calculated. The attenuation parameters of second slices of all WSS modules to the attenuation parameter of N-th slices of all WSS module are acquired in sequence and the average value of the attenuation parameters of the second slices of the all WSS modules to the average value of the attenuation parameters of the N-th slices of the all WSS modules are calculated.

That is, in this embodiment of the present invention, the average value of the attenuation parameters of the first slices of the all WSS modules, the average value of the attenuation parameters of the second slices of the all WSS modules, ..., and the average value of the attenuation parameters of the N-th slices of the all WSS modules are calculated in sequence, and then the first slices of the WSS modules, the second slices of the WSS modules, ..., and the N-th slices of the WSS modules in the cascaded WSS system are adjusted in sequence based on the obtained averages.

The following further describes the control of the WSS channel attenuation parameter by using an example that is not intended to limit the solution of embodiments of the present invention.

This example of the present invention describes a method and system for improving the performance of long-distance 100G/B 100G quasi-Nyquist WDM transmission in a cascaded Flex ROADM system. In this long-distance transmission system, a frequency spacing between channels is close to the baud rate of traffic light. That is, quasi-Nyquist WDM transmission is implemented. For example, 100G PM-QPSK and 200G PM-16QAM traffic signals having a baud rate of about 34 GHz are transmitted in a channel spacing of 37.5 GHz, or 200G PM-8QAM traffic signals having a baud rate of about 45 GHz are transmitted in a channel spacing of 50 GHz. A service transceiver in the system uses a coherent receiver optical module. Moreover, the DSP clock synchronization algorithm at the receiving end of the optical module extracts a clock component from signal light. Penetration of cascading WSSs exist in the end-to-end transmission link of traffic light in the system. The WSSs include WSS units for optical add multiplexing, WSS units for optical drop demultiplexing and WSS units in the bypass direction of ROADM sites. The frequency adjustment granularity supported by the WSS units of the system is significantly smaller than the channel spacing. The corresponding smallest adjustable frequency gird is 12.5 GHz, 6.25 GHz or 3.125 GHz.

Based on the preceding solution, this example of the present invention further provides a WSS spectrum shaping unit having adjustable attenuation within the bandwidth. This unit uses a slice attenuation control method for multiple slices (which may be understood as the slices in this embodiment) in a channel. The method includes the steps below.
1. First, the WSS channel attenuation parameter of the secondary edge slices of a channel is adjusted based on the baud rate of a traffic signal.
   In this step, the WSS channel attenuation parameter of each slice in the bandwidth of the channel is set to 0 before the WSS channel attenuation parameters of the secondary edge slices of the channel are adjusted. With this output spectrum as the starting point of the channel shape adjustment, the WSS channel attenuation parameter of the secondary edge slices of the channel is adjusted such that the spectral height of the lowest spectral point corresponding to the secondary edge slices is close to the spectral height of f_{c} ± B/2. f_{c} denotes the central frequency of the channel. B denotes the baud rate of the traffic signal.
2. Then, the WSS channel attenuation parameter of the center slices of the channel is adjusted based on the flatness of the channel.
   The same synchronous attenuation adjustment is made to one or more slices at the center of the channel. During the adjustment, the WSS channel attenuation parameter of the center slices is adapted to the WSS channel attenuation parameter of the secondary edge slices so that the spectrum in segment f_{c} - B/2 to f_{c} is approximately flat.
3. Finally, the WSS channel attenuation parameter of various slices of the channel is adjusted symmetrically about the center of the channel.

In this step, after the WSS channel attenuation parameter of various slices of the channel is adjusted symmetrically about the center of the channel, the attenuation parameter of the slices at the outermost edge of the channel is zero. After the adjustment, the spectrum shape of the channel remains symmetrical, and the spectrum in segment f_{c} - B/2 to f_{c} + B/2 is approximately flat, that is, the difference between the central frequency component and the edge frequency component in the channel is relatively reduced.

In this manner, the channel shaping parameters (that is, the attenuation parameters adjusted in the preceding steps 1, 2, and 3) of the penetrated WSS units in this traffic configuration are obtained. When traffic is established in a cascaded WSS system, it is feasible to configure the channel shaping parameters for the WSS units at optical multiplexing, optical demultiplexing and ROADM penetration points in a transmission link and perform traffic spectrum shaping for each stage of WSS unit.

Before the preceding steps are performed, when the WSS channel attenuation parameter of each slice in the channel is adjusted, wide-spectrum white noise (which may be understood as the white noise of this embodiment) is connected to the input end of each WSS unit and the output spectrum shape is monitored by a spectrum analyzer at the output end of each WSS unit. Such operation is performed for feedback adjustment of the WSS channel attenuation parameter.

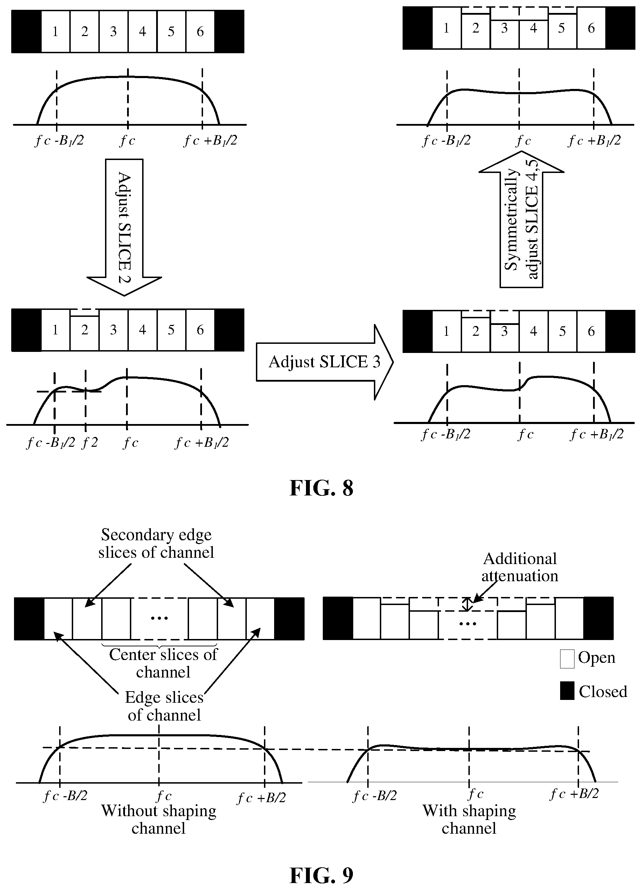

In summary, in this example of the present invention, additional attenuation adjustment (for the effect, see FIG. 9) of the spectral center spectral component of each WSS unit is performed using the spectrum shaping method of WSS slice attenuation control. Such operation helps reduce the difference between the central frequency component and the edge frequency component caused by WSS filtering and ensures that the clock synchronization algorithm at the receiving end effectively extracts the clock from the high-frequency component of a signal, thereby improving the reliable receptivity of the 100G/B100G coherent receiver after cascaded WSSs are cascaded. In addition, as shown in FIG. 4, compared with the pre-emphasis spectrum shaping method of an existing optical transceiver, in this embodiment of the present invention, spectrum shaping at each WSS unit in an optical link helps suppress the filtering effect of each WSS, overcome the problem of limited WSS penetration level caused by insufficient pre-emphasis capability of the optical transceiver, and significantly improve the penetration capability of cascaded WSSs of the optical transceiver. The shaping parameter configuration of this example of the present invention ensures that each WSS uses the same shaping parameter that is not dynamically adjusted as the stage of each WSS unit in an optical link is changed, helping reducing the end-to-end link detection of traffic light at the network control level and the feedback control of the pre-emphasis parameters of an optical transceiver. Moreover, in this example of the present invention, the implementation method is simple and low in cost since it is feasible simply to perform SLICE-level software control and adjustment of units whose WSS bandwidth attenuation is adjustable and not to add additional optical devices in a transmission link.

It is to be noted that the WSS channels and channels mentioned in this embodiment and this example of the present invention may have the same meaning. For example, these channels are all WSS channels or are all channels. Of course, these channels may have different meanings. This is not limited in this embodiment of the present invention.

From the description of the preceding implementations, it will be apparent to those skilled in the art that the method of the preceding embodiment may be implemented by software plus a necessary general-purpose hardware platform or may, of course, be implemented by hardware. However, in many cases, the former is a preferred implementation. Based on this understanding, the solution of the present invention substantially, or the part contributing to the existing art, may be embodied in the form of a software product. The software product is stored in a storage medium (such as a ROM/RAM, a magnetic disk or an optical disk) and includes several instructions for enabling a terminal (which may be a mobile phone, a computer, a server or a network device) to execute the method of each embodiment of the present invention.

### Embodiment two

In this embodiment, a device for controlling the WSS channel attenuation parameter is provided. The device is configured to implement the preceding embodiment and preferred implementations. What has been described will not be repeated. As used below, the term "module" may be software, hardware or a combination thereof capable of implementing predetermined functions. The device in this embodiment is preferably implemented by software, but implementation by hardware or by a combination of software and hardware is also possible and conceived.

FIG. 5 is a block diagram illustrating the structure of the device for controlling the WSS channel attenuation parameter according to an embodiment of the present invention. As shown in FIG. 5, the device includes an input module 50, an adjustment module 52 and a control module 54.

The input module 50 is configured to, for each WSS module in a cascaded WSS system, input white noise to the channel of each WSS module.

The adjustment module 52 is configured to adjust the attenuation parameters of all slices of the channel according to a predefined rule such that the flatness of the output spectrum of the white noise is less than a first threshold.

The control module 54 is configured to calculate the average value of the adjusted attenuation parameters of the slices of a plurality of WSS modules and control the WSS channel attenuation parameter of each WSS module based on the average value.

Through the application of the preceding modules, the following operations are performed for each WSS module in a cascaded WSS system: inputting white noise to the channel of each WSS module and adjusting the attenuation parameters of all slices of the channel according to a predefined rule such that the flatness of the output spectrum of the white noise is less than a first threshold; and calculating the average value of the adjusted attenuation parameters of the slices of all WSS modules and controlling the WSS channel attenuation parameter of each WSS module based on the average value. The preceding solution solves the problem in which the performance of a receiver deteriorates after filtered optical signals enter the receiver because cascaded WSSs cause filtering damage to the optical signals in the related art, thereby effectively reducing filtering damage when the optical signals pass through the cascaded WSSs and improving the performance of the receiver.

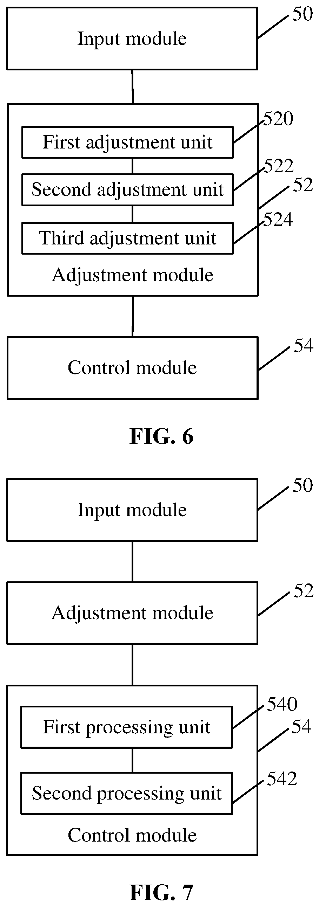

FIG. 6 is a block diagram illustrating the structure of the adjustment module 52 of the device for controlling the WSS channel attenuation parameter according to this embodiment of the present invention. As shown in FIG. 6, the adjustment module 52 includes a first adjustment unit 520, a second adjustment unit 522 and a third adjustment unit 524.

The first adjustment unit 520 is configured to adjust the attenuation parameters of the secondary edge slices of all slices to obtain a first adjustment result.

The second adjustment unit 522 is configured to adjust the attenuation parameters of one or more center slices of the channel based on the first adjustment result to obtain a second adjustment result.

The third adjustment unit 524 is configured to adjust other slices of all slices excluding the secondary edge slices and the center slices based on the first adjustment result and the second adjustment result. That is, in this embodiment of the present invention, the attenuation parameters of the secondary edge slices of all slices, the attenuation parameters of the center slices of all slices and the attenuation parameters of other slices of all slices may be adjusted in sequence.

As shown in FIG. 6, the first adjustment unit 520 is further configured to acquire the baud rate of a traffic signal of the channel; and adjust the attenuation parameters of the secondary edge slices of all slices based on the baud rate.

Optionally, the first adjustment unit 520 is further configured to adjust the attenuation parameters of the secondary edge slices such that the difference between the spectral height of the lowest spectral point corresponding to the secondary edge slices and the spectral height of f_{c} - B/2 is less than a second threshold or such that the difference between the spectral height of the lowest spectral point corresponding to the secondary edge slices and the spectral height of f_{c} + B/2 is less than the second threshold. f_{c} denotes the central frequency of the channel. B denotes the baud rate of the traffic signal.

Optionally, the second adjustment unit 522 is further configured to match the attenuation parameters of one or more center slices of the channel with the attenuation parameters of the secondary edge slices such that the flatness of the output spectrum of the white noise in segment f_{c} - B/2 to f_{c} or segment f_{c} to f_{c} - B/2 is less than the first threshold.

Optionally, the third adjustment unit 524 is configured to adjust the attenuation parameters of other slices symmetrically by taking the central frequency f_{c} of the channel as the central axis according to the attenuation parameters of the secondary edge slices in the first adjustment result and the attenuation parameters of the center slices in the second adjustment result.

FIG. 7 is a block diagram illustrating the structure of the control module 54 of the device for controlling the WSS channel attenuation parameter according to this embodiment of the present invention. As shown in FIG. 7, the control module 54 includes a first processing unit 540 and a second processing unit 542.

The first processing unit 540 is configured to acquire the attenuation parameters of first slices of all WSS modules separately and calculate the average value of the attenuation parameters of the first slices of the all WSS modules.

The second processing unit 542 is configured to acquire the attenuation parameters of second slices of the all WSS modules to the attenuation parameters of the N-th slices of the all WSS modules in sequence and calculate the average value of the attenuation parameters of the second slices of the all WSS modules to the average value of the attenuation parameters of the N-th slices of the all WSS modules.

That is, in this embodiment of the present invention, the average value of the attenuation parameters of the first slices of all WSS modules, the average value of the attenuation parameters of the second slices of all WSS modules, ..., and the average value of the attenuation parameters of the N-th slices of all WSS modules are calculated in sequence, and then the first slices of the WSS modules, the second slices of the WSS modules, ..., and the N-th slices of the WSS modules in the cascaded WSS system are adjusted in sequence based on the obtained averages.

It is to be noted that the preceding modules may be implemented by software or hardware. Implementation by hardware may, but not necessarily, be performed in the following manner: the preceding modules are located in the same processor or the preceding modules are located in any combination in their respective processors.

It is to be noted that the solution of embodiment one and the solution of embodiment two may be used in combination or separately. This is not limited in this embodiment of the present invention.

The following describes the process for controlling of the WSS channel attenuation parameter in conjunction with preferred embodiments that are not intended to limit the solution of embodiments of the present invention.

### Preferred embodiment one

Preferred embodiment one of the present invention provides a method for adjusting attenuation in a WSS channel bandwidth. This method is applied to the scenario where 100G QPSK/200G 16 quadrature amplitude modulation (QAM) optical signals pass through cascaded WSSs in a channel bandwidth of 37.5 GHz. FIG. 8 shows the steps of adjusting the WSS channel attenuation parameter of 6 × 6.25 GHz slices in the WSS channel (which may be understood as the channel mentioned in the preceding embodiments) bandwidth. The steps are described below.

In step 1, wide-spectrum white noise is input to a single WSS unit, the central frequency and channel bandwidth of the WSS unit are set, the output end of the WSS unit is connected to a spectrum analyzer, the WSS channel bandwidth is set to 37.5 GHz, and the six 6.25 GHz slices are configured with the same WSS channel attenuation parameter. The output spectrum shape in this case is shown in FIG. 8.

In step 2, the central frequency f_{c} of the output spectrum is found, and the two horizontal frequency calibration lines of the spectrum analyzer are adjusted to f_{c} - B₁/2 and f_{c} + B₁/2 based on the baud rate B₁ of a traffic transceiver module, for example, a baud rate B₁ of about 34 Gbaud of both a 100G PM-QPSK traffic module with 25% FEC overhead and a 200G PM-16QAM traffic module with 25% FEC overhead.

In step 3, the WSS channel attenuation parameter of secondary edge slice 2 in the WSS channel bandwidth is adjusted such that the spectral height of the lowest spectral point f₂ in segment f_{c} -B₁/2 to f_{c} is close to the spectral height of f_{c} - B₁/2. The adjusted output spectrum is shown in FIG. 8.

In step 4, the WSS channel attenuation parameter of center slice 3 in the WSS channel bandwidth is adjusted such that the spectrum in segment f_{c} - B₁/2 to f_{c} is approximately flat, or more specifically, the flatness of the channel in this segment does not exceed 0.4 dB. The adjusted output spectrum is shown in FIG. 8.

In step 5, the WSS channel attenuation parameter of slice 4 and the WSS channel attenuation parameter of slice 5 in the WSS channel bandwidth are adjusted symmetrically about the center of the channel, that is, the WSS channel attenuation parameter of slice 4 and the WSS channel attenuation parameter of slice 5 are set to the same as the WSS channel attenuation parameter of slice 2 and the WSS channel attenuation parameter of slice 3 respectively. The adjusted WSS channel attenuation parameter of the six 6.25 GHz slices is symmetrical about the central frequency f_{c}. The corresponding output spectrum is also symmetrical. The adjusted output spectrum is shown in FIG. 8. In this case, the attenuation adjustment parameters of the WSS unit are obtained.

In step 6, in view of little difference between WSSs, N (which is not less than 3) WSS modules are selected, steps 3 to 5 are performed repeatedly for the selected N modules so that the attenuation parameters of the slices of the WSS modules are acquired in sequence, the average value of the N attenuation parameters of the individual slices of the WSS modules is calculated separately, and finally the average is used as the attenuation configuration parameter of a corresponding slice in the WSS channel bandwidth.

In summary, preferred embodiment one of the present invention provides a method for shaping in a WSS channel bandwidth of 37.5 GHz. The WSS channel attenuation parameter of each slice is adjusted according to the serial number of the each slice. It is also feasible to perform the symmetrical adjustment of step 5 in a different sequence. That is, it is feasible to adjust secondary slices 2 and 5 and then adjust center slices 3 and 4 as long as the obtained channel attenuation parameters are the same in the two adjustment sequences. This method for shaping in a WSS channel bandwidth of 37.5 GHz is applied to the penetration scenario where 100G QPSK/200G 16QAM signals pass through cascaded WSSs. When this type of traffic is initiated, the system configures the WSS channel attenuation parameter for the six 6.25 GHz slices of the WSS unit in the 37.5 GHz channel bandwidth. Based on a spectrum shaping method for attenuation control in a WSS bandwidth, the method of this preferred embodiment suppresses the difference between the central frequency component and the edge frequency component caused by filtering of cascaded WSSs and ensures that the clock synchronization algorithm at the receiving end effectively extracts the clock component, thereby improving the receptivity of an optical transceiver.

### Preferred embodiment two

Preferred embodiment two of the present invention provides a method for adjusting attenuation in a WSS channel bandwidth. This method is applied to the scenario where 200G PM-8QAM optical signals pass through cascaded WSSs in a channel bandwidth of 50 GHz. The steps of adjusting the WSS channel attenuation parameter of 8 × 6.25 GHz slices in the WSS channel bandwidth are described below.

In step 1, wide-spectrum white noise is input to a single WSS unit, the central frequency and channel bandwidth of the WSS unit are set, the output end of the WSS unit is connected to a spectrum analyzer, the WSS channel bandwidth is set to 50 GHz, and the eight slices are configured with the same WSS channel attenuation parameter. For ease of description, it is assumed that the eight slices in the 50 GHz WSS channel bandwidth are numbered 1 to 8 in sequence.

In step 2, the central frequency f_{c} of the output spectrum is found, and the two horizontal frequency calibration lines of the spectrum analyzer are adjusted to f_{c} - B₂/2 and f_{c} + B₂/2 based on the baud rate B₂ of a traffic transceiver module, for example, a baud rate B₂ of about 45 Gbaud of a 200G PM-8QAM traffic module with 25% FEC overhead.

In step 3, the WSS channel attenuation parameter of secondary edge slice 2 in the WSS channel bandwidth is adjusted such that the spectral height of the lowest spectral point in segment f_{c} -B₂/2 to f_{c} is close to the spectral height of f_{c} - B₂/2.

In step 4, the WSS channel attenuation parameter of center slices 3 and 4 in the WSS channel bandwidth is adjusted and the same adjustment is made to attenuation of two slices in the center such that the spectrum in segment f_{c} - B₂/2 to f_{c} is approximately flat, or more specifically, the flatness of the channel in this segment does not exceed 0.4 dB.

In step 5, the WSS channel attenuation parameter of slices 5, 6 and 7 in the channel bandwidth is adjusted symmetrically about the center of the channel. The adjusted WSS channel attenuation parameter of the eight slices is symmetrical about the central frequency f_{c}. In this case, the attenuation adjustment parameters of the WSS unit are obtained.

In step 6, N WSS modules are selected, the attenuation parameters of the slices of the WSS modules are acquired in sequence, the average value of the N attenuation parameters of the individual slices of the WSS modules is calculated separately, and the average is used as the attenuation configuration amount of a corresponding slice in the WSS channel bandwidth.

In summary, this preferred embodiment of the present invention provides a method for shaping in a WSS channel bandwidth of 50 GHz. The WSS channel attenuation parameter of each slice is adjusted according to the serial number of the each slice. It is also feasible to perform the symmetrical adjustment of step 5 in a different sequence. That is, it is feasible to adjust secondary slices 2 and 7 and then adjust center slices 3 to 6 as long as the obtained channel attenuation parameters are the same in the two adjustment sequences. This method for shaping in a WSS channel bandwidth of 50 GHz is applied to the penetration scenario where 200G 8QAM signals pass through cascaded WSSs. When this type of traffic is initiated, the system configures the WSS channel attenuation parameter for the eight 6.25 GHz slices of the WSS unit in the 50 GHz channel bandwidth. Based on a spectrum shaping method for attenuation control in a WSS bandwidth, the method of this preferred embodiment improves the receptivity of an optical transceiver in a cascaded WSS system.

### Preferred embodiment three

Preferred embodiment three of the present invention provides a method for adjusting attenuation in a WSS channel bandwidth. This method is applied to the scenario where 200G PM-QPSK optical signals pass through cascaded WSSs in a channel bandwidth of 75 GHz. The steps of adjusting the WSS channel attenuation parameter of 12 × 6.25 GHz slices in the WSS channel bandwidth are described below.

In step 1, wide-spectrum white noise is input to a single WSS unit, the central frequency and channel bandwidth of the WSS unit are set, the output end of the WSS unit is connected to a spectrum analyzer, the WSS channel bandwidth is set to 75 GHz, and the 12 slices are configured with the same WSS channel attenuation parameter. For ease of description, it is assumed that the 12 slices in the 75 GHz WSS channel bandwidth are numbered 1 to 12 in sequence.

In step 2, the central frequency f_{c} of the output spectrum is found, and the two horizontal frequency calibration lines of the spectrum analyzer are adjusted to f_{c} - B₃/2 and f_{c} + B3/2 based on the baud rate B₃ of a traffic transceiver module, for example, a baud rate B₃ of about 68 Gbaud of a 200G PM-QPSK traffic module with 25% FEC overhead.

In step 3, the WSS channel attenuation parameter of secondary edge slice 2 in the WSS channel bandwidth is adjusted such that the spectral height of the lowest spectral point in segment f_{c} -B₃/2 to f_{c} is close to the spectral height of f_{c} - B₃/2.

In step 4, the WSS channel attenuation parameter of center slices 3, 4, 5 and 6 in the WSS channel bandwidth is adjusted and the same adjustment is made to attenuation of four slices in the center such that the spectrum in segment f_{c} - B₃/4 to f_{c} is approximately flat, or more specifically, the flatness of the channel in this segment does not exceed 0.4 dB.

In step 5, the WSS channel attenuation parameter of slices 7, 8, 9, 10 and 11 in the channel bandwidth is adjusted symmetrically about the center of the channel. The adjusted WSS channel attenuation parameter of the 12 slices is symmetrical about the central frequency f_{c}. In this case, the attenuation adjustment parameters of the WSS unit are obtained.

In step 6, N WSS modules are selected, the attenuation parameters of the slices of the WSS modules are acquired in sequence, the average value of the N attenuation parameters of the individual slices of the WSS modules is calculated separately, and the average is used as the attenuation configuration parameter of a corresponding slice in the WSS channel bandwidth.

In summary, preferred embodiment three of the present invention provides a method for shaping in a WSS channel bandwidth of 75 GHz. The WSS channel attenuation parameter of each slice is adjusted according to the serial number of the each slice. It is also feasible to perform the symmetrical adjustment of step 5 in a different sequence. That is, it is feasible to adjust secondary slices 2 and 11 and then adjust center slices 3 to 10 as long as the obtained channel attenuation parameters are the same in the two adjustment sequences. This method for shaping in a WSS channel bandwidth of 75 GHz is applied to the penetration scenario where 200G PM-QPSK signals pass through cascaded WSSs. When this type of traffic is initiated, the system configures the WSS channel attenuation parameter for the 12 6.25 GHz slices of the WSS unit in the 75 GHz channel bandwidth. Based on a spectrum shaping method for attenuation control in a WSS bandwidth, the method of this preferred embodiment improves the receptivity of an optical transceiver in a cascaded WSS system.

### Preferred embodiment four

Preferred embodiment four of the present invention provides a filtering performance optimization method based on WSS slice control. This WSS slice control method uses a finer spectral granularity. For example, the minimum adjustable spectral granularity is 3.125 GHz. Based on the preceding three preferred embodiments, this method further improves the spectral flatness and the receptivity of an optical transceiver after cascaded WSSs are cascaded. The steps of adjusting the WSS channel attenuation parameter of 12 × 3.125 GHz slices in the WSS channel bandwidth are described below by using 100G PM-QPSK as an example.

In step 1, wide-spectrum white noise is input to a single WSS unit, the central frequency and channel bandwidth of the WSS unit are set, the output end of the WSS unit is connected to a spectrum analyzer, the WSS channel bandwidth is set to 37.5 GHz, and the 12 slices are configured with the same WSS channel attenuation parameter. For ease of description, it is assumed that the 12 slices in the 37.5 GHz WSS channel bandwidth are numbered 1 to 12 in sequence.

In step 2, the central frequency f_{c} of the output spectrum is found, and the two horizontal frequency calibration lines of the spectrum analyzer are adjusted to f_{c} - B₁/2 and f_{c} + B₁/2 based on the baud rate B₁ of a traffic transceiver module.

In step 3, the WSS channel attenuation parameter of secondary edge slice 2 in the WSS channel bandwidth is adjusted such that the spectral height of the lowest spectral point in segment f_{c} -B₁/2 to f_{c} is close to the spectral height of f_{c} - B₁/2.

In step 4, the WSS channel attenuation parameter of center slices 3, 4, 5 and 6 in the WSS channel bandwidth is adjusted and the same adjustment is made to attenuation of four slices in the center such that the spectrum in segment f_{c} - B₁/2 to f_{c} is approximately flat, or more specifically, the flatness of the channel in this segment does not exceed 0.4 dB.

In step 5, the WSS channel attenuation parameter of slices 7, 8, 9, 10 and 11 in the channel bandwidth is adjusted symmetrically about the center of the channel. The adjusted WSS channel attenuation parameter of the 12 slices is symmetrical about the central frequency f_{c}. In this case, the attenuation adjustment parameters of the WSS unit are obtained.

In step 6, N WSS modules are selected, the attenuation parameters of the slices of the WSS modules are acquired in sequence, the average value of the N attenuation parameters of the individual slices of the WSS modules is calculated separately, and the average is used as the attenuation configuration parameter of a corresponding slice in the WSS channel bandwidth.

In summary, preferred embodiment four of the present invention provides a method for shaping in a WSS channel bandwidth of 37.5 GHz. The WSS channel attenuation parameter of each slice is adjusted according to the serial number of the each slice. It is also feasible to perform the symmetrical adjustment of step 5 in a different sequence. That is, it is feasible to adjust secondary slices 2 and 11 and then adjust center slices 3 to 10 as long as the obtained channel attenuation parameters are the same in the two adjustment sequences. This method for shaping in a WSS channel bandwidth of 37.5GHz is applied to the penetration scenario where 200G PM-QPSK signals pass through cascaded WSSs. When this type of traffic is initiated, the system configures the WSS channel attenuation parameter for the 12 3.125 GHz slices of the WSS unit in the 37.5 GHz channel bandwidth. For several other traffic types having bandwidths with different baud rates, the number of adjustable slices in a bandwidth varies with the traffic type corresponding to the bandwidth. The method involved is the same as described earlier and will not be repeated here. This spectrum shaping method based on WSS with a finer adjustable spectral granularity improves the flatness of a WSS channel and thereby further improves the receptivity of an optical transceiver in a cascaded WSS system.

### Embodiment three

An embodiment of the present invention provides a storage medium. The storage medium includes a stored program. When the program is executed, the method of any one of the preceding embodiments is performed.

Optionally, in this embodiment, the storage medium may be configured to store program codes for performing the steps below.

In S1, for each WSS module in a cascaded WSS system, white noise is input to the channel of each WSS module and the attenuation parameters of all slices of the channel are adjusted according to a predefined rule such that the flatness of the output spectrum of the white noise is less than a first threshold.

In S2, the average value of the adjusted attenuation parameters of the slices of a plurality of WSS modules is calculated and the WSS channel attenuation parameter of each WSS module is controlled based on the average value.

Optionally, the storage medium is further configured to store program codes for performing the steps below.

In S3, the attenuation parameters of the secondary edge slices of all slices are adjusted so that a first adjustment result is obtained.

In S4, the attenuation parameters of one or more center slices of the channel are adjusted based on the first adjustment result so that a second adjustment result is obtained.

In S5, other slices of all slices than the secondary edge slices and the center slices are adjusted based on the first adjustment result and the second adjustment result.

Optionally, in this embodiment, the storage medium may include, but is not limited to, a U disk, a read-only memory (ROM), a random access memory (RAM), a mobile hard disk, a magnetic disk, an optical disk or another medium capable of storing program codes.

Optionally, for specific examples in this embodiment, reference may be made to the examples described in the preceding embodiments and optional implementations, and the specific examples will not be repeated in this embodiment.

Apparently, it is to be understood by those skilled in the art that the modules or steps in embodiments of the present invention may be implemented by a general-purpose computing device and may be concentrated on a single computing device or distributed in a network formed by multiple computing devices. Optionally, these modules or steps may be implemented by program codes executable by the computing device. Thus, these modules or steps may be stored in a storage device and executed by the computing device. Moreover, in some cases, the illustrated or described steps may be executed in a sequence different from the sequence described herein. Alternatively, each module or step may be implemented by being made into an integrated circuit module separately or multiple ones of these modules or steps may be implemented by being made into a single integrated circuit module. In this manner, the present invention is not limited to any specific combination of hardware and software.

The preceding are only preferred embodiments of the present invention and are not intended to limit the present invention. For those skilled in the art, the present invention may have various modifications and variations. The scope of the invention is defined by the appended claims.

### INDUSTRIAL APPLICABILITY

As described earlier, the method and device for controlling the WSS channel attenuation parameter, the storage medium and the processor provided in embodiments of the present invention have the following beneficial effects: The problem is solved in which the performance of a receiver deteriorates after filtered optical signals enter the receiver because cascaded WSSs cause filtering damage to the optical signals in the related art. Filtering damage is effectively reduced when the optical signals pass through the cascaded WSSs. Thus, the performance of the receiver is improved.

## Claims

1. A method for controlling a wavelength-selective switch, WSS, channel attenuation parameter, comprising:
for each WSS module in a cascaded WSS system, inputting (S302) white noise to a WSS channel of the each WSS module and adjusting attenuation parameters of all *N* slices of the WSS channel according to a predefined rule until a flatness of an output spectrum of the white noise being less than a first threshold; and
calculating (S304) an average value of adjusted attenuation parameters of slices of WSS channels of a plurality of WSS modules and controlling an WSS channel attenuation parameter of the each WSS module based on the average value;
wherein the adjusting the attenuation parameters of all N slices of the WSS channel according to the predefined rule comprises:
adjusting attenuation parameters of secondary edge slices of the N slices to obtain a first adjustment result;
adjusting attenuation parameters of one or more center slices of the WSS channel based on the first adjustment result to obtain a second adjustment result; and
adjusting other slices of the N slices excluding the secondary edge slices and the one or more center slices based on the first adjustment result and the second adjustment result;
wherein the secondary edge slices are slices next to the slice of the left spectrum edge or the right spectrum edge, the other slices refer to slices in which the secondary edge slices and the one or more center slices are excluded from the N slices, and *N* is an integer greater than 2;
**characterized in that**, the adjusting the attenuation parameters of the secondary edge slices of the N slices comprises:
acquiring a baud rate of a traffic signal of the channel; and
adjusting the attenuation parameters of the secondary edge slices of the N slices based on the baud rate.

2. The method of claim 1, wherein the adjusting the attenuation parameters of the secondary edge slices of the N slices based on the baud rate comprises:
adjusting the attenuation parameters of the secondary edge slices such that a difference between a spectral height of a lowest point in a spectrum corresponding to the secondary edge slices and a spectral height of f_{c} - B/2 is less than a second threshold or such that a difference between the spectral height of the lowest point in the spectrum corresponding to the secondary edge slices and a spectral height of f_{c} + B/2 is less than the second threshold, wherein f_{c} denotes a central frequency of the channel and B denotes the baud rate of the traffic signal.

3. The method of claim 1, wherein the adjusting the attenuation parameters of the the one or more center slices of the channel based on the first adjustment result comprises:
matching the attenuation parameters of the one or more center slices of the channel with the attenuation parameters of the secondary edge slices such that the flatness of the output spectrum of the white noise in segment f_{c} - B/2 to f_{c} or segment f_{c} to f_{c} - B/2 is less than the first threshold.

4. The method of claim 1, wherein the adjusting the other slices of the N slices excluding the secondary edge slices and the one or more center slices based on the first adjustment result and the second adjustment result comprises:
taking a central frequency f_{c} of the channel as a central axis to adjust attenuation parameters of the other slices symmetrically according to the attenuation parameters of the secondary edge slices in the first adjustment result and the attenuation parameters of the one or more center slices in the second adjustment result.

5. The method of claim 1, wherein calculating the average value of the adjusted attenuation parameters of the slices of the WSS channels of the plurality of WSS modules comprises:
acquiring attenuation parameters of first slices of the WSS channels of all WSS modules separately and calculating an average value of the attenuation parameters of the first slices of the WSS channels for each WSS module; and
acquiring attenuation parameters of the second slices of the the WSS channels of all WSS modules to attenuation parameters of the N-th slices of the WSS channels of the plurality of WSS modules in sequence and calculating an average value of the attenuation parameters of the second slices of the WSS channels for each WSS module to an average value of the attenuation parameters of the N-th slices of the WSS channels for each WSS module.

6. A device for controlling a wavelength-selective switch, WSS, channel attenuation parameter, comprising:
an input module (50), which is configured to, for each WSS module in a cascaded WSS system, input white noise to a WSS channel of the each WSS module;
an adjustment module (52), which is configured to adjust attenuation parameters of all *N* slices of the WSS channel according to a predefined rule until a flatness of an output spectrum of the white noise is less than a first threshold; and
a control module (54), which is configured to calculate an average value of adjusted attenuation parameters of slices of WSS channels of of a plurality of WSS modules and control an WSS channel attenuation parameter of the each WSS module based on the average value;
wherein the adjustment module comprises:
a first adjustment unit (520), which is configured to adjust attenuation parameters of secondary edge slices of the N slices to obtain a first adjustment result;
a second adjustment unit (522), which is configured to adjust attenuation parameters of one or more center slices of the WSS channel based on the first adjustment result to obtain a second adjustment result; and
a third adjustment unit (524), which is configured to adjust other slices of the slices excluding the secondary edge slices and the one or more center slices based on the first adjustment result and the second adjustment result;
wherein the secondary edge slices are slices next to the slice of the left spectrum edge or the right spectrum edge, the other slices refer to slices in which the secondary edge slices and the one or more center slices are excluded from the N slices, and Nis an integer greater than 2;
**characterized in that**, the first adjustment unit comprises:
an acquisition subunit, which is configured to acquire a baud rate of a traffic signal of the channel; and
a first adjustment subunit, which is configured to adjust the attenuation parameters of the secondary edge slices of the N slices based on the baud rate.

7. The device of claim 6, wherein the first adjustment subunit is further configured to adjust the attenuation parameters of the secondary edge slices such that a difference between a spectral height of a lowest point in a spectrum corresponding to the secondary edge slices and a spectral height of f_{c} - B/2 is less than a second threshold or such that a difference between the spectral height of the lowest point in the spectrum corresponding to the secondary edge slices and a spectral height of f_{c} + B/2 is less than the second threshold, wherein f_{c} denotes a central frequency of the channel and B denotes the baud rate of the traffic signal.

8. The device of claim 6, wherein the second adjustment subunit is further configured to match the attenuation parameters of the one or more center slices of the channel with the attenuation parameters of the secondary edge slices such that the flatness of the output spectrum of the white noise in segment f_{c} - B/2 to f_{c} or segment f_{c} to f_{c} - B/2 is less than the first threshold.

9. The device of claim 6, wherein the third adjustment subunit is configured to: adjust attenuation parameters of the other slices symmetrically by taking a central frequency f_{c} of the channel as a central axis according to the attenuation parameters of the secondary edge slices in the first adjustment result and the attenuation parameters of the one or more center slices in the second adjustment result.

10. The device of claim 6, wherein the control module comprises:
a first processing unit, which is configured to acquire the attenuation parameters of
the first slices in the WSS channels of all WSS modules separately and calculate an average value of the attenuation parameters of first slices in the WSS channels of all WSS modules; and
a second processing unit, which is configured to acquire the attenuation parameters of
the second slices of the WSS channels of all WSS modules to attenuation parameters of the N-th slices of the WSS channels of all WSS modules in sequence and calculate an average value of the attenuation parameters of the second slices of the WSS channels for each WSS module to an average value of the attenuation parameters of the N-th slices of the WSS channels for each WSS module.

11. A storage medium comprising a stored program, wherein when the program is executed, the method of any one of claims 1 to 5 is performed on the device of claim 6.

## Patentansprüche

1. Verfahren zum Steuern eines Kanal-Dämpfungsparameters eines wellenlängenselektiven Schalters (WSS), umfassend:
für jedes WSS-Modul in einem kaskadierten WSS-System, Eingeben (S302) von weißem Rauschen in einen WSS-Kanal jedes WSS-Moduls und Anpassen von Dämpfungsparametern aller N Slices des WSS-Kanals gemäß einer vordefinierten Regel, bis eine Flachheit eines Ausgangsspektrums des weißen Rauschens kleiner als ein erster Schwellenwert ist; und
Berechnen (S304) eines Durchschnittswerts von angepassten Dämpfungsparametern von Slices von WSS-Kanälen einer Vielzahl von WSS-Modulen und Steuern eines WSS-Kanal-Dämpfungsparameters jedes WSS-Moduls basierend auf dem Durchschnittswert;
wobei das Anpassen der Dämpfungsparameter aller N Slices des WSS-Kanals gemäß der vordefinierten Regel umfasst:
Anpassen von Dämpfungsparametern von sekundären Randslices der *N* Slices, um ein erstes Anpassungsergebnis zu erhalten;
Anpassen von Dämpfungsparametern von einem oder mehreren Mittelslices des WSS-Kanals basierend auf dem ersten Anpassungsergebnis, um ein zweites Anpassungsergebnis zu erhalten; und
Anpassen anderer Slices der N Slices, ausschließlich der sekundären Randslices und des einen oder der mehreren Mittelslices, basierend auf dem ersten Anpassungsergebnis und dem zweiten Anpassungsergebnis;
wobei die sekundären Randslices Slices neben dem Slice des linken Spektrumrands oder dem rechten Spektrumrand sind, die anderen Slices sich auf Slices beziehen, in denen die sekundären Randslices und der eine oder die mehreren Mittelslices von den N Slices ausgeschlossen sind, und N eine ganze Zahl größer als 2 ist;
**dadurch gekennzeichnet, dass** das Anpassen der Dämpfungsparameter der sekundären Randslices der *N* Slices umfasst:
Erfassen einer Baudrate eines Verkehrssignals des Kanals; und
Anpassen der Dämpfungsparameter der sekundären Randslices der N Slices basierend auf der Baudrate.

2. Verfahren nach Anspruch 1, wobei das Anpassen der Dämpfungsparameter der sekundären Randslices der N Slices basierend auf der Baudrate umfasst:
Anpassen der Dämpfungsparameter der sekundären Randslices, derart, dass eine Differenz zwischen einer spektralen Höhe eines tiefsten Punkts in einem Spektrum, das den sekundären Randslices entspricht, und einer spektralen Höhe von f_{c} - B/2 kleiner als ein zweiter Schwellenwert ist, oder derart, dass eine Differenz zwischen der spektralen Höhe des tiefsten Punkts in dem Spektrum, das den sekundären Randslices entspricht, und einer spektralen Höhe von f_{c} + B/2 kleiner als der zweite Schwellenwert ist, wobei f_{c} eine Zentralfrequenz des Kanals bezeichnet und B die Baudrate des Verkehrssignals bezeichnet.

3. Verfahren nach Anspruch 1, wobei das Anpassen der Dämpfungsparameter des einen oder der mehreren Mittelslices des Kanals basierend auf dem ersten Anpassungsergebnis umfasst:
Abgleichen der Dämpfungsparameter des einen oder der mehreren Mittelslices des Kanals mit den Dämpfungsparametern der sekundären Randslices, derart, dass die Flachheit des Ausgangsspektrums des weißen Rauschens im Segment f_{c} - B/2 bis f_{c} oder im Segment f_{c} bis f_{c} - B/2 kleiner als der erste Schwellenwert ist.

4. Verfahren nach Anspruch 1, wobei das Anpassen der anderen Slices der N Slices, ausschließlich der sekundären Randslices und des einen oder der mehreren Mittelslices, basierend auf dem ersten Anpassungsergebnis und dem zweiten Anpassungsergebnis umfasst:
Nehmen einer Zentralfrequenz f_{c} des Kanals als Zentralachse, um Dämpfungsparameter der anderen Slices symmetrisch gemäß den Dämpfungsparametern der sekundären Randslices im ersten Anpassungsergebnis und den Dämpfungsparametern des einen oder der mehreren Mittelslices im zweiten Anpassungsergebnis anzupassen.

5. Verfahren nach Anspruch 1, wobei das Berechnen des Durchschnittswerts der angepassten Dämpfungsparameter der Slices der WSS-Kanäle einer Vielzahl von WSS-Modulen umfasst:
Erfassen von Dämpfungsparametern erster Slices der WSS-Kanäle aller WSS-Module separat und Berechnen eines Durchschnittswerts der Dämpfungsparameter der ersten Slices der WSS-Kanäle für jedes WSS-Modul; und
Erfassen von Dämpfungsparametern der zweiten Slices der WSS-Kanäle aller WSS-Module zu Dämpfungsparametern der N-ten Slices der WSS-Kanäle der Vielzahl von WSS-Modulen sequentiell und Berechnen eines Durchschnittswerts der Dämpfungsparameter der zweiten Slices der WSS-Kanäle für jedes WSS-Modul zu einem Durchschnittswert der Dämpfungsparameter der N-ten Slices der WSS-Kanäle für jedes WSS-Modul.

6. Vorrichtung zum Steuern eines Kanal-Dämpfungsparameters eines wellenlängenselektiven Schalters (WSS), umfassend:
ein Eingabemodul (50), das konfiguriert ist, für jedes WSS-Modul in einem kaskadierten WSS-System weißes Rauschen in einen WSS-Kanal jedes WSS-Moduls einzugeben;
ein Anpassungsmodul (52), das konfiguriert ist, Dämpfungsparameter aller N Slices des WSS-Kanals gemäß einer vordefinierten Regel anzupassen, bis eine Flachheit eines Ausgangsspektrums des weißen Rauschens kleiner als ein erster Schwellenwert ist; und
ein Steuermodul (54), das konfiguriert ist, einen Durchschnittswert von angepassten Dämpfungsparametern von Slices von WSS-Kanälen einer Vielzahl von WSS-Modulen zu berechnen und einen WSS-Kanal-Dämpfungsparameter jedes WSS-Moduls basierend auf dem Durchschnittswert zu steuern;
wobei das Anpassungsmodul umfasst:
eine erste Anpassungseinheit (520), die konfiguriert ist, Dämpfungsparameter von sekundären Randslices der N Slices anzupassen, um ein erstes Anpassungsergebnis zu erhalten;
eine zweite Anpassungseinheit (522), die konfiguriert ist, Dämpfungsparameter von einem oder mehreren Mittelslices des WSS-Kanals basierend auf dem ersten Anpassungsergebnis anzupassen, um ein zweites Anpassungsergebnis zu erhalten; und
eine dritte Anpassungseinheit (524), die konfiguriert ist, andere Slices der N Slices, ausschließlich der sekundären Randslices und des einen oder der mehreren Mittelslices, basierend auf dem ersten Anpassungsergebnis und dem zweiten Anpassungsergebnis anzupassen;
wobei die sekundären Randslices Slices neben dem Slice des linken Spektrumrands oder dem rechten Spektrumrand sind, die anderen Slices sich auf Slices beziehen, in denen die sekundären Randslices und der eine oder die mehreren Mittelslices von den N Slices ausgeschlossen sind, und N eine ganze Zahl größer als 2 ist;
**dadurch gekennzeichnet, dass** die erste Anpassungseinheit umfasst:
eine Erfassungseinheit, die konfiguriert ist, eine Baudrate eines Verkehrssignals des Kanals zu erfassen; und
eine erste Anpassungsuntereinheit, die konfiguriert ist, die Dämpfungsparameter der sekundären Randslices der N Slices basierend auf der Baudrate anzupassen.

7. Vorrichtung nach Anspruch 6, wobei die erste Anpassungsuntereinheit ferner konfiguriert ist, die Dämpfungsparameter der sekundären Randslices anzupassen, derart, dass eine Differenz zwischen einer spektralen Höhe eines tiefsten Punkts in einem Spektrum, das den sekundären Randslices entspricht, und einer spektralen Höhe von f_{c} - B/2 kleiner als ein zweiter Schwellenwert ist, oder derart, dass eine Differenz zwischen der spektralen Höhe des tiefsten Punkts in dem Spektrum, das den sekundären Randslices entspricht, und einer spektralen Höhe von f_{c} + B/2 kleiner als der zweite Schwellenwert ist, wobei f_{c} eine Zentralfrequenz des Kanals bezeichnet und B die Baudrate des Verkehrssignals bezeichnet.

8. Vorrichtung nach Anspruch 6, wobei die zweite Anpassungsuntereinheit ferner konfiguriert ist, die Dämpfungsparameter des einen oder der mehreren Mittelslices des Kanals mit den Dämpfungsparametern der sekundären Randslices abzugleichen, derart, dass die Flachheit des Ausgangsspektrums des weißen Rauschens im Segment f_{c} - B/2 bis f_{c} oder im Segment f_{c} bis f_{c} - B/2 kleiner als der erste Schwellenwert ist.

9. Vorrichtung nach Anspruch 6, wobei die dritte Anpassungsuntereinheit konfiguriert ist zum: Anpassen von Dämpfungsparametern der anderen Slices symmetrisch unter Annahme einer Zentralfrequenz f_{c} des Kanals als Zentralachse gemäß den Dämpfungsparametern der sekundären Randslices im ersten Anpassungsergebnis und den Dämpfungsparametern des einen oder der mehreren Mittelslices im zweiten Anpassungsergebnis.

10. Vorrichtung nach Anspruch 6, wobei das Steuermodul umfasst:
eine erste Verarbeitungseinheit, die konfiguriert ist, die Dämpfungsparameter der ersten Slices in den WSS-Kanälen aller WSS-Module separat zu erfassen und einen Durchschnittswert der Dämpfungsparameter erster Slices in den WSS-Kanälen aller WSS-Module zu berechnen; und
eine zweite Verarbeitungseinheit, die konfiguriert ist, die Dämpfungsparameter der zweiten Slices der WSS-Kanäle aller WSS-Module zu Dämpfungsparametern der N-ten Slices der WSS-Kanäle aller WSS-Module sequentiell zu erfassen und einen Durchschnittswert der Dämpfungsparameter der zweiten Slices der WSS-Kanäle für jedes WSS-Modul zu einem Durchschnittswert der Dämpfungsparameter der N-ten Slices der WSS-Kanäle für jedes WSS-Modul zu berechnen.

11. Speichermedium, umfassend ein gespeichertes Programm, wobei, wenn das Programm ausgeführt wird, das Verfahren nach einem der Ansprüche 1 bis 5 auf der Vorrichtung nach Anspruch 6 durchgeführt wird.

## Revendications

1. Procédé de commande d'un paramètre d'atténuation de canal d'un commutateur sélectif en longueur d'onde, WSS, comprenant :
pour chaque module WSS dans un système WSS en cascade, l'entrée (S302) d'un bruit blanc dans un canal WSS de chaque module WSS et l'ajustement de paramètres d'atténuation de toutes les N tranches du canal WSS selon une règle prédéfinie jusqu'à ce qu'une planéité d'un spectre de sortie du bruit blanc soit inférieure à un premier seuil ; et
le calcul (S304) d'une valeur moyenne de paramètres d'atténuation ajustés de tranches de canaux WSS d'une pluralité de modules WSS et la commande d'un paramètre d'atténuation de canal WSS de chaque module WSS sur la base de la valeur moyenne ;
dans lequel l'ajustement des paramètres d'atténuation de toutes les N tranches du canal WSS selon la règle prédéfinie comprend :
l'ajustement de paramètres d'atténuation de tranches de bord secondaires des N tranches pour obtenir un premier résultat d'ajustement ;
l'ajustement de paramètres d'atténuation d'une ou plusieurs tranches centrales du canal WSS sur la base du premier résultat d'ajustement pour obtenir un second résultat d'ajustement ; et
l'ajustement d'autres tranches des N tranches à l'exclusion des tranches de bord secondaires et des une ou plusieurs tranches centrales sur la base du premier résultat d'ajustement et du second résultat d'ajustement ;
dans lequel les tranches de bord secondaires sont des tranches à côté de la tranche du bord gauche du spectre ou du bord droit du spectre, les autres tranches font référence à des tranches dans lesquelles les tranches de bord secondaires et les une ou plusieurs tranches centrales sont exclues des N tranches, et N est un entier supérieur à 2 ;
**caractérisé en ce que** l'ajustement des paramètres d'atténuation des tranches de bord secondaires des N tranches comprend :
l'acquisition d'un débit en bauds d'un signal de trafic du canal ; et
l'ajustement des paramètres d'atténuation des tranches de bord secondaires des N tranches sur la base du débit en bauds.

2. Procédé selon la revendication 1, dans lequel l'ajustement des paramètres d'atténuation des tranches de bord secondaires des N tranches sur la base du débit en bauds comprend :
l'ajustement des paramètres d'atténuation des tranches de bord secondaires de telle sorte qu'une différence entre une hauteur spectrale d'un point le plus bas dans un spectre correspondant aux tranches de bord secondaires et une hauteur spectrale de f_{c} - B/2 soit inférieure à un second seuil ou de telle sorte qu'une différence entre la hauteur spectrale du point le plus bas dans le spectre correspondant aux tranches de bord secondaires et une hauteur spectrale de f_{c} + B/2 soit inférieure au second seuil, dans lequel f_{c} désigne une fréquence centrale du canal et B désigne le débit en bauds du signal de trafic.

3. Procédé selon la revendication 1, dans lequel l'ajustement des paramètres d'atténuation des une ou plusieurs tranches centrales du canal sur la base du premier résultat d'ajustement comprend :
le fait de faire correspondre les paramètres d'atténuation des une ou plusieurs tranches centrales du canal avec les paramètres d'atténuation des tranches de bord secondaires de telle sorte que la planéité du spectre de sortie du bruit blanc dans le segment f_{c} - B/2 à f_{c} ou le segment f_{c} à f_{c} - B/2 soit inférieure au premier seuil.

4. Procédé selon la revendication 1, dans lequel l'ajustement d'autres tranches des N tranches à l'exclusion des tranches de bord secondaires et des une ou plusieurs tranches centrales sur la base du premier résultat d'ajustement et du second résultat d'ajustement comprend ;
la prise en compte d'une fréquence centrale f_{c} du canal comme axe central pour ajuster des paramètres d'atténuation des autres tranches symétriquement en fonction des paramètres d'atténuation des tranches de bord secondaires dans le premier résultat d'ajustement et des paramètres d'atténuation des une ou plusieurs tranches centrales dans le second résultat d'ajustement.

5. Procédé selon la revendication 1, dans lequel le calcul de la valeur moyenne des paramètres d'atténuation ajustés des tranches des canaux WSS de la pluralité de modules WSS comprend :
l'acquisition de paramètres d'atténuation de premières tranches des canaux WSS de tous les modules WSS séparément et le calcul d'une valeur moyenne des paramètres d'atténuation des premières tranches des canaux WSS pour chaque module WSS ; et
l'acquisition de paramètres d'atténuation des secondes tranches des canaux WSS de tous les modules WSS aux paramètres d'atténuation des N-ième tranches des canaux WSS de la pluralité de modules WSS en séquence et le calcul d'une valeur moyenne des paramètres d'atténuation des secondes tranches des canaux WSS pour chaque module WSS à une valeur moyenne des paramètres d'atténuation des N-ième tranches des canaux WSS pour chaque module WSS.

6. Dispositif de commande d'un paramètre d'atténuation de canal d'un commutateur sélectif en longueur d'onde, WSS, comprenant :
un module d'entrée (50), qui est configuré, pour chaque module WSS dans un système WSS en cascade, pour entrer du bruit blanc dans un canal WSS de chaque module WSS ;
un module d'ajustement (52), qui est configuré pour ajuster des paramètres d'atténuation de toutes les N tranches du canal WSS selon une règle prédéfinie jusqu'à ce qu'une planéité d'un spectre de sortie du bruit blanc soit inférieure à un premier seuil ; et
un module de commande (54), qui est configuré pour calculer une valeur moyenne de paramètres d'atténuation ajustés de tranches de canaux WSS d'une pluralité de modules WSS et commander un paramètre d'atténuation de canal WSS de chaque module WSS sur la base de la valeur moyenne ;
dans lequel le module d'ajustement comprend :
une première unité d'ajustement (520), qui est configurée pour ajuster des paramètres d'atténuation de tranches de bord secondaires des N tranches pour obtenir un premier résultat d'ajustement ;
une deuxième unité d'ajustement (522), qui est configurée pour ajuster des paramètres d'atténuation d'une ou plusieurs tranches centrales du canal WSS sur la base du premier résultat d'ajustement pour obtenir un second résultat d'ajustement ; et
une troisième unité d'ajustement (524), qui est configurée pour ajuster d'autres tranches des N tranches à l'exclusion des tranches de bord secondaires et des une ou plusieurs tranches centrales sur la base du premier résultat d'ajustement et du second résultat d'ajustement ;
dans lequel les tranches de bord secondaires sont des tranches à côté de la tranche du bord gauche du spectre ou du bord droit du spectre, les autres tranches font référence à des tranches dans lesquelles les tranches de bord secondaires et les une ou plusieurs tranches centrales sont exclues des N tranches, et N est un entier supérieur à 2 ;
**caractérisé en ce que** la première unité d'ajustement comprend :
une sous-unité d'acquisition, qui est configurée pour acquérir un débit en bauds d'un signal de trafic du canal ; et
une première sous-unité d'ajustement, qui est configurée pour ajuster les paramètres d'atténuation des tranches de bord secondaires des N tranches sur la base du débit en bauds.

7. Dispositif selon la revendication 6, dans lequel la première sous-unité d'ajustement est également configurée pour ajuster les paramètres d'atténuation des tranches de bord secondaires de telle sorte qu'une différence entre une hauteur spectrale d'un point le plus bas dans un spectre correspondant aux tranches de bord secondaires et une hauteur spectrale de f_{c} - B/2 soit inférieure à un second seuil ou de telle sorte qu'une différence entre la hauteur spectrale du point le plus bas dans le spectre correspondant aux tranches de bord secondaires et une hauteur spectrale de f_{c} + B/2 soit inférieure au second seuil, dans lequel f_{c} désigne une fréquence centrale du canal et B désigne le débit en bauds du signal de trafic.

8. Dispositif selon la revendication 6, dans lequel la deuxième sous-unité d'ajustement est également configurée pour faire correspondre les paramètres d'atténuation des une ou plusieurs tranches centrales du canal avec les paramètres d'atténuation des tranches de bord secondaires de telle sorte que la planéité du spectre de sortie du bruit blanc dans le segment f_{c} - B/2 à f_{c} ou le segment f_{c} à f_{c} - B/2 soit inférieure au premier seuil.

9. Dispositif selon la revendication 6, dans lequel la troisième sous-unité d'ajustement est configurée pour : ajuster des paramètres d'atténuation des autres tranches symétriquement en prenant en compte une fréquence centrale f_{c} du canal comme axe central pour ajuster des paramètres d'atténuation des autres tranches symétriquement en fonction des paramètres d'atténuation des tranches de bord secondaires dans le premier résultat d'ajustement et des paramètres d'atténuation des une ou plusieurs tranches centrales dans le second résultat d'ajustement.

10. Dispositif selon la revendication 6, dans lequel le module de commande comprend :
une première unité de traitement, qui est configurée pour acquérir les paramètres d'atténuation des premières tranches dans les canaux WSS de tous les modules WSS séparément et calculer une valeur moyenne des paramètres d'atténuation des premières tranches dans les canaux WSS pour tous les modules WSS ; et
une seconde unité de traitement, qui est configurée pour acquérir les paramètres d'atténuation des secondes tranches des canaux WSS de tous les modules WSS aux paramètres d'atténuation des N-ième tranches des canaux WSS de tous les modules WSS en séquence et calculer une valeur moyenne des paramètres d'atténuation des secondes tranches des canaux WSS pour chaque module WSS à une valeur moyenne des paramètres d'atténuation des N-ième tranches des canaux WSS pour chaque module WSS.

11. Support de stockage, comprenant un programme stocké, dans lequel, lorsque le programme est exécuté, le procédé selon l'une quelconque des revendications 1 à 5 est réalisé sur le dispositif selon la revendication 6.
